Europäisches Patentamt
European Patent Office
Office européen des brevets

(19)

(11) Veröffentlichungsnummer: **0 173 880**
**B1**

(12)

# EUROPÄISCHE PATENTSCHRIFT

(45) Veröffentlichungstag der Patentschrift: **07.10.87**

(51) Int. Cl.⁴: **C 02 F 1/72**, B 01 J 21/18, B 01 J 23/16

(21) Anmeldenummer: **85109994.5**

(22) Anmeldetag: **08.08.85**

**E R R A T U M**

| DIE TEXTSTELLE :<br>TEXT PUBLISHED :<br>LE PASSAGE SUIVANT : | (SEITE, SPALTE, ZEILE)<br>(PAGE, COLUMN, LINE)<br>(PAGE,COLONNE,LIGNE) | | | LAUTET BERICHTIGT:<br>SHOULD READ :<br>DEVRAIT ETRE LU : |
|---|---|---|---|---|
| bei Potentiallagen von $\epsilon_h$ + 1,3 | 2 | 2 | 1 | bei Potentiallagen von $\epsilon_h$= + 1,3 |
| $\epsilon_h$ = + 1,8 bis | | | 14 | $\epsilon$ = + 1,8 V bis |
| mit 0,2%ig. Hydraxinhydratlösung | 4 | 6 | 13 | mit 0,2%ig. Hydrazinhydratlösung |
| kA/m² ($\epsilon_h$=)mV | | | 32 | kA/m² ($\epsilon_h$=0mV) |
| ein Ruhepotential von 110mV | | 6 | 48 | ein Ruhepotential von 1100mV |
| wrid mit Wasser gewaschen | 5 | 7 | 2 | wird mit Wasser gewaschen |
| begträgt | | 8 | 28 | beträgt |
| mit Vanadium-V-Verbindung | 6 | 10 | 42 | mit Vanadium-V-Verbindungen |

Tag der Entscheidung über die Berichtigung )
Date of decision on rectification: ) 13.07.88
Date de décision portant sur modification: )

Ausgabe- und Veröffentlichungstag: )
Issue and publication date: ) 07.09.88
Date d'edition et de publication: )

Patbl.Nr:)
EPB no:) 88/36
Bull. no:)

(19) Europäisches Patentamt
European Patent Office
Office européen des brevets

(11) Veröffentlichungsnummer: **0 173 880**
**B1**

# (12) EUROPÄISCHE PATENTSCHRIFT

(45) Veröffentlichungstag der Patentschrift: **07.10.87**

(51) Int. Cl.⁴: **C 02 F 1/72**, B 01 J 21/18, B 01 J 23/16

(21) Anmeldenummer: **85109994.5**

(22) Anmeldetag: **08.08.85**

## (54) Verfahren zur oxidativen Reinigung von Abwässern.

(30) Priorität: **18.08.84 DE 3430484**

(43) Veröffentlichungstag der Anmeldung: **12.03.86 Patentblatt 86/11**

(45) Bekanntmachung des Hinweises auf die Patenterteilung: **07.10.87 Patentblatt 87/41**

(84) Benannte Vertragsstaaten: **AT BE CH DE FR GB IT LI NL**

(56) Entgegenhaltungen:
**DE - A - 2 714 075**
**FR - A - 2 289 237**
**US - A - 4 098 660**
**US - A - 4 276 198**

(73) Patentinhaber: **BASF Aktiengesellschaft, Carl-Bosch-Strasse 38, D-6700 Ludwigshafen (DE)**

(72) Erfinder: **Habermann, Wolfgang, Gonsenheimer Spiess 8, D-6500 Mainz 1 (DE)**
Erfinder: **Hammes, Peter, Dr., Haagweg 14, D-6701 Ruppertsberg (DE)**
Erfinder: **Engelhardt, Hubert, Buergermeister-Horlacher-Strasse 84, D-6700 Ludwigshafen (DE)**
Erfinder: **Geiger, Wolfgang, Hoelderlinstrasse 5, D-6831 Plankstadt (DE)**
Erfinder: **Haltrich, Walter, Dr., Bismarckstrasse 38, D-6803 Edingen-Neckarhausen (DE)**
Erfinder: **Simmler, Werner, Dr., Neumannstrasse 13, D-6700 Ludwigshafen (DE)**

EP 0 173 880 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Bei der oxidativen Abwasserreinigung setzt in der Technik aktivierte Kohlen ein, die es ermöglichen die Schadstoffe und den Sauerstoff in höherer Konzentartion auf der Kohlenoberfläche zu binden, so dass der biologische und chemische Abbau beschleunigt wird. Diese Kohlen sorbieren im Vergleich zum Wasser etwa die 800-fache Menge Sauerstoff, wobei ein Teil des Sauerstoffs chemisorptiv gebunden wird und gemäss der Gleichung

$$O_2 + H_2O + 2\,e \rightleftarrows OH^- + O_2H^- \epsilon_h = +300\ mV\ (pH = 7)$$

nach dem Zweielektronenschritt (Berl-Mechanismus) abreagiert. Die chemische oder biologische Oxidation erfolgt bei diesem Verfahren an den polarisierten Kohlenstoffpartikeln oder über das Reaktionsprodukt Wasserstoffperoxid, welches bei der Sauerstoffreduktion anfällt. Technisch hergestellt werden die aktiven Kohlen durch partielle Oxidation von Kohle mit Wasserdampf, Sauerstoff, Alkalisalzen, Alkalihydroxiden und dergleichen bei höheren Temperaturen oder durch Verkohlung von kohlenstoffhaltigen Materialien mit Zinkchlorid, Eisenchlorid, Phosphorsäure oder anderen wasserentziehenden Substanzen oder durch Glühbehandlung von Aktivkohle in inerter Atmosphäre wie z.B. Stickstoff, Wasserstoff oder Vakuum.

Bei allen aufgeführten Verfahren erhält man aktivierte Kohlen, die die Sauerstoffreduktion nur nach dem Berl-Mechanismus ermöglichen.

Auch andere chemische oxidative Vorbehandlungen z.B. mit Salpetersäure, Schwefelsäure, Oleum, Salpetersäure-Schwefelsäure-, Salpetersäure-Wasserstoffperoxid-, Schwefelsäure-Wasserstoffperoxid-, Schwefelsäure-Peroxidschwefelsäure-, Schwefelsäure-Chromsäuregemischen bei Temperaturen $< +120°C$ und Stickstoffdioxid bei Temperaturen $< +300°C$ führen zu keinen wesentlichen Verbesserungen der katalytischen Aktivität.

Der Nachteil einer oxidativen Abwasserbehandlung mit den aufgeführten Oxidationskatalysatoren ist, dass bei den Potentiallagen des Berl-Mechanismus eine Reihe von organischen Schadstoffen wie z.B. Huminsäuren, Fulvinsäuren, Aromaten oder chlorierte Kohlenwasserstoffe nicht oder nur schwer oxidativ abbaubar sind.

Es war daher die Aufgabe der vorliegenden Erfindung, ein Verfahren zu suchen, welches es ermöglicht, die Sauerstoffreduktion weitgehend nach dem Vierelektronenschritt gemäss der Gleichung

$$O_2 + 2H_2O + 4\,e \rightleftarrows 4\,OH^- \epsilon_h = +815\ mV\ (pH = 7)$$

durchzuführen und damit die Schadstoffe bei höheren Potentialen oxidativ gut abbauen zu können.

Es wurde nun gefunden, dass die oxidative Reinigung von Abwässern mit kohlenstoffhaltigen Katalysatoren und Oxidationsmitteln bei höheren Potentialen durchgeführt werden kann, wenn man einen Kohlenstoffträger verwendet, der in wässerigen Mineralsäuren bei Potentiallagen von $\epsilon_h$ + 1,3 V bis $\epsilon_h$ = + 10 V anodisch oxidiert und anschliessend mit Molybdän-VI- und/oder Wolfram-VI- und/oder Vanadium-V-Verbindungen dotiert wurde.

Als Kohlenstoffträger können z.B. Graphit, Koks, Aktivkohlevorprodukte, Aktivkohle oder Anthrazit verwendet werden. Bevorzugt kommen Graphit und Aktivkohlevorprodukte in Betracht.

Die anodische Oxidation des Kohlenstoffträgers wird in wässerigen Mineralsäuren wie z.B. Salpetersäure, Phosphorsäure, Schwefelsäure und Perchlorsäure bei Potentiallagen von $\epsilon_h$ = + 1,3 V bis $\epsilon_h$ = + 10 V, vorzugsweise $\epsilon_h$ = + 1,8 bis $\epsilon_h$ = + 2,5 V durchgeführt.

Besonders geeignet ist wässerige 2 bis 70 Gew.-%ige, vorzugsweise 30 bis 65 Gew.-%ige Salpetersäure. Die anodische Oxidation erfolgt zweckmässig bei Temperaturen zwischen −2 und +100°C, bevorzugt bei +10 bis +50°C und Stromdichten von 0,1 bis 10 $kA/m^2$. Der günstigste Stromdichtebereich liegt bei der anodischen Oxidation zwischen 0,5 und 4 $kA/m^2$ äusserer Kohlenstoffoberfläche.

Die Oxidationszeit kann 2 Sekunden bis zu 2 Stunden, vorzugsweise 5 bis 30 Minuten betragen. Der gebundene Sauerstoff auf der Kohlenstoffoberfläche sollte nach der anodischen Oxidation etwa 30 Atomprozent betragen.

Zum Dotieren und Imprägnieren des anoxidierten Kohlenstoffträgers kann man gelöste oder fein dispergierte Verbindungen des Molybdäns, Wolframs oder Vanadiums einsetzen.

Geeignete Molybdänverbindungen sind z.B. Ammoniumdimolybdat, Ammoniumheptamolybdat, Ammoniumdecamolybdat, Natriummolybdat, Kaliummolybdat, Molybdäntetrachlorid oder Molybdänoxitetrachlorid, geeignete Wolframverbindungen sind z.B. Natriumwolframat, Kaliumwolframat, Wolframhexachlorid oder Wolframoxitetrachlorid und als Vanadinverbindungen kommen z.B. Natrium- oder Kaliumvanadat, Alkalidivanadate oder -Tetravanadate, Natrium-Ammoniumvanadat oder Vanadiumoxitrichlorid in Betracht.

Vorzugsweise verwendet man zur Dotierung des anoxidierten Kohlenstoffträgers Alkalimolybdate und -vanadate. Bei Einsatz von Vanadinverbindungen muss für eine gute Fixierung auf der anoxidierten Kohlenstoffträgeroberfläche gesorgt werden, damit kein Vanadium in das Abwasser gelangt. Vanadiumverbindungen werden deshalb vorzugsweise durch Überführung in Eisen-, Titan- oder Zirkonvanadate fixiert.

Neben den Molybdän- und/oder Wolfram-VI- und/oder Vanadium-V-Verbindungen kann man die Kohlenstoffträger zusätzlich mit Oxiden, Oxihydraten oder Hydroxiden des Titans, Zirkons, Eisens, Nickels, Kobalts und Mangans dotieren. Durch derartige Verbindungen kann man später im Abwasser die Immobilisierung von Mikroorganismen bzw. Enzymen und die Sorption der Schadstoffe auf der Katalysatoroberfläche verbessern.

Zur Dotierung löst oder dispergiert man die Molybdän-, Wolfram- oder Vanadinverbindungen oder sonstigen Zusätze in Wasser, Alkoholen wie

z.B. Methanol, Ethanol, Ethern wie z.B. Methylethylether oder chlorierten Kohlenwasserstoffen wie z.B. Chloroform oder Tetrachlorkohlenstoff.

Als bevorzugtes Lösungsmittel wird Wasser verwendet. Die Konzentration der Wolfram-, Molybdän- oder Vanadinverbindungen im Lösungsmittel kann 0,01 Gew.-% bis zur Sättigungsgrenze, vorzugsweise 0,3 bis 5 Gew.-% betragen.

Nach der Imprägnierung mit den Dotiermitteln kann man die Kohlenstoffträger zur besseren Fixierung trocknen, wobei Halogenide vorher hydrolysiert werden. Die eigentliche Fixierung erfolgt mit wässerigen verdünnten Mineralsäuren oder sauren Alkalisalzen. Bevorzugt wird hierzu 0,2 bis 4 Gew.-% wässerige Salpetersäure oder Schwefelsäure oder Alkalisulfatlösung von pH 0,5 bis 1,5 verwendet. Eine gute Fixierung wird erreicht, wenn man die Fixierung bei Temperaturen von +15 bis +30°C bei einer Verweilzeit von 0,1 bis 3 h durchführt.

Nach der Fixierung kann eine zusätzliche Dotierung und teilweise Anreduktion der Molybdän-VI-, Wolfram-VI- und/oder Vanadium-V-Verbindungen mit Sulfiden oder Schwefelwasserstoff erfolgen. Hierzu verwendet man bevorzugt wässerige Ammoniumsulfid- oder Alkalisulfidlösungen wie z.B. Natriumsulfid oder Kaliumsulfid. Die Konzentration dieser Lösungen kann 0,1 bis 10 Gew.-% an Alkalisulfid, vorzugsweise 1 bis 6 Gew.-% betragen. Zur Dotierung wird das Katalysatormaterial wenige Minuten, vorzugsweise 1 bis 8 Minuten in die Alkali- oder Ammoniumsulfidlösungen getaucht, anschliessend abgetrennt und mit verdünnten wässerigen Mineralsäuren vom überschüssigen Sulfid befreit.

An Stelle von Sulfiden können zur Anreduktion aber auch andere Reduktionsmittel wie z.B. Hydrazinhydrat, Hydroxylamin, Hydrochinon, Wasserstoff oder die kathodische Reduktion eingesetzt werden.

Als besonders geeignete Aktivierung und Fixierung hat sich nach der anodischen Oxidation des Kohlenstoffträgers eine Dotierung mittels Molybdän-VI- oder Vanadium-V-Verbindungen mit Eisen-III-Verbindungen und/oder Zirkon-III- bzw. -VI- und/oder Titan-III- bzw. -IV-Verbindungen und/oder Jod-VII- und/oder Jod-V- und/oder Tellur-VI-Verbindungen erwiesen. Bei der Aktivierung mit Molybdän sollte das Atomverhältnis Molybdän zu Eisen 1:1 bis 3:2, Molybdän zu Jod 6:1 und Molybdän zu Tellur 6:1 bzw. in den Mischungen entsprechend den Verhältnissen angepasst werden, während bei der Aktivierung mit Vanadium sich ein Atomverhältnis von Vanadium zu Titan und/oder Zirkon von 1:1 bis 2:1 als günstig erwiesen hat.

Als Eisen-III-Verbindungen setzt man vorzugsweise Eisen-III-nitrat, Eisen-III-chlorid oder Eisen-III-sulfat ein. Jod wird bevorzugt in Form der Alkalijodate oder Perjodate verwendet, während Tellur vorzugsweise als Alkalitellurit zum Einsatz kommt. Titan und Zirkon werden vorzugsweise in Form der Halogenide oder Oxisulfate verwendet.

An Stelle von Tellurverbindungen können auch Selenverbindungen verwendet werden. Aus toxikologischen Gründen wird man in den meisten Fällen auf den Einsatz dieser Verbindungen verzichten.

Als Oxidationsmittel zur Umsetzung der Schadstoffe im Abwasser wird vorzugsweise Sauerstoff oder Luft verwendet. In Sonderfällen, bei schwer oxidierbaren Schadstoffen, können aber auch andere Oxidantien wie z.B. Wasserstoffperoxid, Peroxidisulfate, Perborate, Chlorate, Chlorite, Chlordioxid, Ozon, Salpetersäure, nitrose Gase, Stickstoffdioxid, Eisen-III-salze, Eisen-IIIsalz-Wasserstoffperoxidgemische, Salpetersäure-Wasserstoffperoxidgemische und Salpetersäure-Wasserstoffperoxid-Eisen-III-salzgemische verwendet werden.

Vorzugsweise verwendet man Eisen-III-nitrat-Wasserstoffperoxidgemische, die bei einem Einsatz von Molybdän und/oder Vanadium dotierter Kohlenstoffträger eine besonders gute Oxidationswirkung beim Abbau chlorierter Kohlenwasserstoffe zeigen.

Zur Erhöhung der Schadstoffkonzentration an der Katalysatoroberfläche und damit zur Verbesserung der Schadstoffoxidation werden auf dem Kohlenstoffträger anionische und/oder kationische Polyelektrolyte sorbiert oder ein Gemenge beider Partikel verwendet.

Als Polyelektrolyte kommen nicht oxidierbare anorganische Anionen- und Kationenaustauscher wie z.B. Titanoxihydrat, Zirkonoxihydrat, Kaolinit, Montmorillonit, Apatit, synthetischer Hydroxylapatit, Magnesiumoxihydrat, Aluminumoxihydrat, Aluminium-Titanoxihydrat, Aluminium-Zirkonoxihydrat sowie organische Anionen- und Kationenaustauscher wie z.B. Polymerisate oder Copolymerisate aus Styrol, Styrol und Divinylbenzol, Styrol und Maleinsäureanhydrid, Acrylester und Divinylbenzol, Methacrylsäureester und Divinylbenzol, Olefinen, perfluorierten Olefinen, sowie Vinylchlorid, die als ladungstragende Gruppen Sulfonsäure- und/oder Carboxyl- und/oder quaternäre Ammonium- und/oder primäre, sekundäre oder tertiäre Amingruppen enthalten.

Bevorzugt kommen synthetischer Hydroxylapatit, Aluminium-Titanoxihydrat, Aluminium-Zirkonoxihydrat, Zirkonoxihydrat, Titanoxihydrat in Betracht.

Für die technische Ausführung setzt man die dotierten Kohlenstoffträger als Granulate in Filterschüttungen ein, die von oben mit dem schadstoffhaltigen und mit Sauerstoff gesättigten Wasser durchströmt werden. Diese Filterschüttungen können so betrieben werden, dass die Hohlräume zwischen den Granulaten mit Flüssigkeit geflutet sind (Nassfahrweise) oder noch Gas z.B. Luft, Sauerstoff enthalten wie z.B. in Rieselkörpern (Trockenfahrweise). Zur Erhöhung der Sauerstoffkonzentration im Wasser kann unter Druck gearbeitet werden. Die Körnung des Material sollte einheitlich sein. Bevorzugt sind Korngrössen von 2 bis 6 mm.

An Stelle der von oben nach unten durchströmten Filterschüttungen können Schüttungen einge-

setzt werden die von unten nach oben durchströmt werden. Je nach Strömungsgeschwindigkeit können solche Schüttungen als expandiertes Bett oder Wirbelbett betrieben werden, wobei zusätzlich Luft oder Sauerstoff eingegast werden kann. Hier können feinteiligere Granulate z.B. 0,5 bis 2 mm zum Einsatz kommen. Es ist auch möglich, Tauchkörper oder Schwebekörper mit dem Katalysator zu beschichten.

Die dotierten Kohlenstoffträger können weiterhin in Form von porösen Rohren und Platten ausgeführt werden, die einseitig aktiviert und dotiert sind, wobei das Abwasser auf der aktiven Seite vorbeiströmt, während von der anderen Seite, welche hydrophobiert sein kann, Luft oder Sauerstoff durch den Kohlenstoffträger gedrückt wird.

Weiterhin ist es möglich, Graphit- oder Kohlefilze oberflächlich zu aktivieren und dotieren, die mit dem sauerstoffhaltigen Abwasser durchströmt werden.

Bei Einsatz anderer Oxidationsmittel als Sauerstoff wie z.B. Wasserstoffperoxid, Eisen-III-nitratwasserstoffperoxidgemischen und dergl. ist es zweckmässig, durchströmte Filterschüttungen einzusetzen.

*Beispiel 1:*

Ein Aktivkohlegranulat mit den Abmessungen von 5 mm Länge und 3 mm Durchmesser wird in 50 Gew.-%ig., wässeriger Salpetersäure 8 Minuten bei einer Stromdichte von ~6 kA/m² und einem Potential $\epsilon_h$ = 2,2 V anodisch oxidiert. Anschliessend wird mit Wasser gewaschen und mit 5 Gew.-%ig. Natriummolybdatlösung imprägniert. Danach trocknet man 3 h bei +80° C und befeucht im Anschluss daran die imprägnierte Kohle mit 5 Gew.-%ig. wässeriger Eisen-III-Nitratlösung von pH = 1. Nach dem Waschen mit Wasser wird der Katalysator mit 0,2%ig. Hydraxinhydratlösung ein bis zwei Minuten befeuchtet, wieder mit Wasser gewaschen und in 5%ig. wässerige Schwefelsäure eingetaucht.

Bei Einsatz des Katalysators in 5%ig. wässeriger Schwefelsäure und Sauerstoffbegasung stellt sich ein Ruhepotential von $\epsilon_h$ = 1080 mV ein. Die max. Austauschstromdicht bei Begasung mit Sauerstoff und kathodischer Polarisation beträgt >10 kA/m² geometrischer Granulatoberfläche bei einem Potential von $\epsilon_h$ = 0 mV. Vergleichsweise weist die unbehandelte Kohle und die nur anodisch voroxidierte aber nicht dotierte Kohle unter gleichen Bedingungen folgende Daten auf:

| Aktivkohle | Oxidans | Ruhepotential | max. Austauschstromdichte |
|---|---|---|---|
| Behandlung | Art | $\epsilon_h$/mV | kA/m² ($\epsilon_h$=) mV |
| unbehandelt | $O_2$ | 680 | 0,05 |
| anodisch oxidiert aber nicht dotiert | $O_2$ | 900 | 0,5-0,8 |
| dotiert aber nicht anodisch oxidiert | $O_2$ | 880 | 3 |

Setzt man das anodisch oxidierte und dotierte Kohlegranulat in einer Filterschüttung ein, die man mit sauerstoffgesättigten Kläranlagenauslaufwasser betriebt, so ergeben sich bei einer Verweilzeit von 10 Minuten folgende mitttlere Werte für die COD- und TOC-Verminderung beim Betrieb über 5 Monate.

| TOC-Gehalt im Zulauf mg/l | TOC-Gehalt im Ablauf mg/l | COD im Zulauf mg/l | COD im Ablauf mg/l |
|---|---|---|---|
| 70 | 12 | 180 | 40 |

Der Gehalt an Chlorkohlenwasserstoff (Chloroform), der im Zulauf ~0,3 mg/l beträgt, wird auf Werte <0,01 mg/l abgesenkt.

*Beispiel 2:*

Ein Graphitgranulat mit einer Korngrösse von 2 bis 4 mm wird wie in Beispiel 1 anodisch oxidiert. Anschliessend wäscht man mit Wasser und imprägniert den oxidierten Graphit mit einer Lösung, die 5 Gew.-% Natriumvanadat enthält. Danach wird der imprägnierte Graphit etwa 1 h bei +25° C gealtert und 5 Minuten in 5 Gew.-%ig. wässerige Zirkonsulfatlösung von pH = 1 eingetaucht. Nach dieser Imprägnierung wird mit Wasser gewaschen und mit wenig 0,5 Gew.-%ig. Schwefelsäure nachgespült.

In der 5%ig. Schwefelsäure stellt sich bei Begasung mit Sauerstoff ein Ruhepotential von 110 mV ein, die max. Austauschstromdichte unter kathodischer Polarisation beträgt ~8 kA/m² bei einem Potential von $\epsilon_h$ = 0 mV. Der Katalysator liefert im Kläranlagenauslaufwasser vergleichbare Abbauwerte wie der Katalysator in Beispiel 1. Vorzugsweise kann dieser Katalysator zur Oxidation nitrithaltiger und chlorkohlenwasserstoffhaltiger Abwässer verwendet werden.

*Beispiel 3:*

Ein Aktivkohlegranulat mit den Abmessungen von 5 mm Länge und 3 mm Durchmesser wird in 50 Gew.%-ig. Salpetersäure auf einer Platinelektrode 5 mm hoch aufgeschichtet und 5 Minuten bei einer Stromdichte von 6 kA/m² (bezogen auf die Platinfläche) anodisch oxidiert. Das Potential

der Granulatkörner beträgt am Ende der Reaktion $\epsilon_h$ = 2,1 V. Nach der Oxidation wrid mit Wasser gewaschen und mit 5%ig. Natriumvanadatlösung imprägniert. Anschliessend taucht man das imprägnierte Granulat ca. 3 Minuten in 7,5 Gew.-%ig. wässerige Titan-III-chloridlösung von pH = 1 und altert nach Abtrennen der Lösung 2 Stunden bei Raumtemperatur. Beim Einsatz des Katalysators in 5%ig., wässeriger Schwefelsäure unter Begasung mit Sauerstoff stellt sich ein Ruhepotential von $\epsilon_h$ = 1200 mV ein, die max. Austauschstromdichte bei kathodischer Polarisation und einem Potential von $\epsilon_h$ = 0 mV beträgt 10 kA/$m^2$. Beim Betrieb mit Kläranlagenausbauwasser in einer Filterschüttung wie in Beispiel 1 werden Restgehalte an TOC von ~10 mg/l und COD von ~30 mg/l erhalten. Der Katalysator eignet sich weiterhin zur Oxidation sulfithaltiger Abwässer.

*Beispiel 4:*

Zehn Graphitrohre mit den Abmessungen von 500 mm Länge, 60 mm Innendurchmesser, 80 mm Aussendurchmesser und einer offenen Porosität von 16% werden auf der äusseren Seite in 50 Gew.-%ig. wässeriger Salpetersäure bei einer Stromdichte von 2 kA/$m^2$ und einem Potential $\epsilon_h$ = 1,95 V etwa 10 Minuten anodisch oxidiert. Anschliessend werden die Rohre wie in Beispiel 3 aktiviert und senkrecht in ein Zylindergefäss so eingebaut, dass der Abstand der Rohrachsen etwa 100 mm beträgt. Durch die Innenbohrung der Rohre wird Luft gedrückt, während die Aussenflächen von Abwasser umspült werden. Der Luftdruck im Innern der Rohre wird so gewählt, dass die Luft gerade durch die Rohrwandungen austritt. Diese Anordnung eignet sich vorzugsweise zur Abreinigung stark verschmutzer Abwässer, z.B. von Deponieabwässern.

*Beispiel 5:*

Ein Graphitgranulat von 2 bis 4 mm Korngrösse wird in 50 Gew.-%ig. Salpetersäure auf einer Platinelektrode etwa 4 mm hoch aufgeschüttet und 25 Minuten bei einer Stromdichte von 6 kA/$m^2$ (bezogen auf die Platinfläche) anodisch oxidiert. Das Potential der Graphitpartikel beträgt etwa $\epsilon_h$ = +1,98 V.

Nach der Oxidation wird mit Wasser gewaschen und das oxidierte Granulat mit einer 5 Gew.-%ig. wässerigen Natriummolybdatlösung imprägniert. Anschliessend wird die Probe bei +80°C etwa 2 h getempert danach etwa 3 Minuten in 0,5%ig. Schwefelsäure eingetaucht und nach Abtrennen der Schwefelsäure 2 Stunden bei Raumtemperatur gealtert. Im Anschluss an diesen Prozess wird mit Wasser gewaschen, die Probe etwa 1 Minute bei 0,5% ig. Kaliumsulfidlösung befeuchtet und anschliessend mit Waschwasser vom pH-Wert 1, welches mit $H_2SO_4$ eingestellt wurde, vom Restschwefel befreit.

Bei Einsatz des Katalysators in 5%ig. wässeriger Schwefelsäure stellt sich im Gegenwart von Sauerstoff ein Ruhepotential von 1080 mV ein. Die max. Sauerstoffaustauschstromdichte bei Begasung mit Sauerstoff unter kathodischer Polarisation begträgt ~8 kA/$m^2$ geometrischer Granulatoberfläche bei einem Potential von $\epsilon_h$ = 0 mV. Der Katalysator eignet sich vorzugsweise zur Oxidation von Schadstoffen in neutralen und sauren Abwässern.

*Beispiel 6:*

Ein Graphitgranulat von 3 mm Korngrösse, das wie in Beispiel 5 anodisch oxidiert und mit Molybdat dotiert wurde, wird in den nachfolgend aufgeführten Elektrolyten eingesetzt, wobei folgende Potentiale und Austauschstromdichten mit Wasserstoffperoxid als Oxidans erhalten werden.

| Elektrolyt (Oxidans) Wasser mit | Ruhepotential $\epsilon_h$/mV | Austauschstromdichte max. (bei kathodischer Polarisation) kA/$m^2$ |
|---|---|---|
| 1% $Fe(NO_3)_3$ + 1% $H_2O_2$, pH = 0 | 1250 | >12 |
| 1% $FeCl_3$ + 1% $H_2O_2$, pH = 0 | 990 | ~10 |
| 1% $Fe_2(SO_4)_3$ + 1% $H_2O_2$, pH = 0 | 950 | ~10 |

Als günstigstes Oxidans erweist sich das System $Fe(NO_3)_3/H_2O_2$. Mit diesem Oxidationsmittel können Chlorkohlenwasserstoffe wie z.B. Chloraceton, Chloral, Chloracetal, Chloroform, Chloressigsäure und o-Chlorpyridin schon bei kurzen Verweilzeiten (~10 Minuten) mit dem 1,5-fachen stöchiometrischen Überschuss dieses Oxidationsmittels fast vollständig abgebaut werden.

*Beispiel 7:*

In 50 Gew.-%ig., wässeriger Salpetersäure wurden Graphitplatten bei einer Stromdichte von 2 kA/$m^2$ und einer Temperatur von +30°C unterschiedlich lange anodisch oxidiert. Die Proben wurden mit destilliertem Wasser gewaschen und 12 h bei $3 \cdot 10^{-8}$ mbar entgast. Anschliessend wurde ein ESCA-Oberflächenanalytik durchgeführt, wobei die Oberfläche auf Sauerstoff, Kohlenstoff und C-C-Bindung analysiert wurde. Die maximale Informationstiefe der nachfolgend aufgeführten Werte bezieht sich auf etwa 4,2 bis 6,8 nm.

*(Tabelle auf der nächsten Seite)*

Aus dieser Übersicht wird ersichtlich, dass die anodische Oxidation des Graphits bereits nach 5 Minuten einen stationären Zustand erreicht hat. Untersuchungen mit Graphiten, die unterschiedlich lange voroxidiert und mit Molybdän-VI-

| Oxidationszeit Min. | Konz. $O_2$ Atom. % | Konz. C Atom. % | Anteil-C-C-Bind. Atom. % | Graphitpotent. єh V |
|---|---|---|---|---|
| 0,5 | 87 | 18 | 58 | 1,5 |
| 1 | 82 | 21 | 48 | 1,96 |
| 2 | 77 | 25 | 40 | 1,97 |
| 3 | 74 | 27 | 34 | 1,96 |
| 4 | 72 | 28 | 30 | 1,96 |
| 5 | 70,5 | 29 | 26 | 1,96 |
| 10 | 70,5 | 29 | 24 | 1,97 |
| 15 | 70,5 | 29 | 24 | 1,97 |

Verbindungen dotiert waren, zeigten, dass die katalytische Aktivität bei Oxidationszeiten von <5 Minuten deutlich zurückgeht.

*Beispiel 8:*

Ein Graphitgranulat von 3 mm Korngrösse wird wie in Beispiel 5 anodisch oxidiert. Anschliessend reduziert man kathodisch in 5%ig. wässeriger Schwefelsäure bei einer Stromdichte von 1 kA/m² etwa 10 Minuten.

Das Granulat wird in einer Filterschüttung wie in Beispiel 1 eingesetzt und mit Mikroorganismen vom Typ Nitrobacter nitrosomonas angeimpft. Beim Betrieb mit Kläranlagenauslaufwasser werden folgende Werte für den COD-, TOC- und Ammoniumabbaugefunden:

| TOC-Gehalt Zulauf mg/l | TOC-Gehalt Ablauf mg/l | COD Zulauf mg/l | COD Ablauf mg/l | $NH_4^+$-Gehalt Zulauf mg/l | $NH_4^+$-Gehalt Ablauf mg/l |
|---|---|---|---|---|---|
| 70 | 25 | 180 | 65 | 120 | 1 |

## Patentansprüche

1. Verfahren zur oxidativen Reinigung von Abwässern mit einem kohlenstoffhaltigen Katalysator und Oxidationsmitteln, dadurch gekennzeichnet, dass man einen Kohlenstoffträger verwendet, der in wässerigen Mineralsäuren bei Potentiallagen von $\epsilon_h$ = + 1,3 V bis $\epsilon_h$ = + 10 V anodisch oxidiert und anschliessend mit Molybdän-VI- und/oder Wolfram-VI- und/oder Vanadium-V-Verbindungen dotiert wird.

2. Verfahren nach Anspruch 1, dadurch gekennzeichnet, das man als Kohlenstoffträger Graphit, Koks oder Aktivkohle verwendet.

3. Verfahren nach Anspruch 1 und 2, dadurch gekennzeichnet, dass man die anodische Oxidation in wässeriger Salpetersäure bei Potentiallagen von $\epsilon_h$ = + 1,8 bis $\epsilon_h$ = + 2,5 V durchführt.

4. Verfahren nach Anspruch 1 bis 3, dadurch gekennzeichnet, dass man zur Dotierung des Kohlenstoffträgers wässerige Alkali-Molybdat- und/oder Wolframatlösungen und/oder Vanadatlösungen verwendet.

5. Verfahren nach Anspruch 1 bis 4, dadurch gekennzeichnet, dass man zusätzlich zu der Dotierung mit Molybdän-VI- und/oder Wolfram-VI- und/oder Vanadium-V-Verbindungen eine Behandlung mit wässerigen Alkali- oder Ammoniumsulfidlösungen durchführt.

6. Verfahren nach Anspruch 1 bis 4, dadurch gekennzeichnet, dass man den anodisch anoxidierten Kohlenstoffträger mit Molybdän-VI- und Eisen-III-Verbindungen dotiert und mit wässeriger Hydrazinhydratlösungen anreduziert.

7. Verfahren nach Anspruch 1 bis 4, dadurch gekennzeichnet, dass man den anodisch anoxidierten Kohlenstoffträger mit Molybdän-VI- und/oder Wolfram-VI und/oder Vanadium-V-Verbindungen und Jod-VII- oder Jod-V- oder Tellur-VI-Verbindungen dotiert, wobei das Atomverhältnis Molybdän bzw. Wolfram bzw. Vanadium zu Jod bzw. Tellur 6:1 beträgt.

8. Verfahren nach Anspruch 1 bis 4, dadurch gekennzeichnet, dass man den anoxidierten Kohlenstoffträger mit Vanadium-V-Verbindung und Titan- und/oder Zirkon-III- oder Zirkon-IV-Verbindungen dotiert, wobei das Verhältnis Vanadium zu Titan und/oder Zirkon 1:1 bis 2:1 beträgt.

9. Verfahren nach Anspruch 1 bis 4 und 6 bis 8, dadurch gekennzeichnet, dass die mit den Molybdän-VI- und/oder Wolfram-VI- und/oder Vanadium-V-Verbindungen dotierten anoxidierten Kohlenstofträger zusätzlich Elemente der 8. Nebengruppe wie Eisen, Kobalt, Nickel in Form ihrer zweiwertigen Oxide, Oxihydrate bzw. Hydroxide und/oder Elemente der 4. Nebengruppe wie Zirkon, Titan in Form ihrer drei- und/oder vierwertigen Oxide bzw. Oxihydrate enthalten.

10. Verfahren nach Anspruch 1 bis 9, dadurch gekennzeichnet, dass an Stelle von Sauerstoff als Oxidationsmittel Eisen-III-nitrat-Wasserstoffperoxidgemische eingesetzt werden.

11. Verfahren nach Anspruch 1 bis 10, dadurch gekennzeichnet, dass der Kohlenstoffträger Zusätze an anionischen und/oder kationischen Polyelektrolyten enthält oder in Kombination mit diesen verwendet wird.

## Claims

1. A process for the oxidative treatment of a wastewater with a carbon-containing catalyst and an oxidizing agent, wherein the carbon carrier used is subjected to anodic oxidation in an aqueous mineral acid at a potential $\epsilon_h$ of from +1.3 to +10 V and then doped with molybdenum(VI) and/or tungsten (VI) and/or vanadium(V) compounds.

2. A process as claimed in Claim 1, wherein the carbon carrier used is graphite, coke or active carbon.

3. A process as claimed in Claims 1 and 2, wherein the anodic oxidation is carried out in aqueous nitric acid at a potential $\epsilon_h$ of from +1.8 to +2.5 V.

4. A process as claimed in Claims 1 to 3, wherein doping of the carbon carrier is effected using aqueous alkali metal molybdate and/or tungstate solutions and/or vanadate solutions.

5. A process as claimed in Claims 1 to 4, wherein, in addition to doping with molybdenum(VI) and/or tungsten(VI) and/or vanadium(V) compounds, a treatment with an aqueous alkali metal sulfide or ammonium sulfide solution is carried out.

6. A process as claimed in Claims 1 to 4, wherein the carbon carrier which has been subjected to partial anodic oxidation is doped with molybdenum(VI) and iron(III) compounds and partially reduced with an aqueous hydrazine hydrate solution.

7. A process as claimed in Claims 1 to 4, wherein the carbon carrier which has been subjected to partial anodic oxidation is doped with molybdenum(VI) and/or tungsten(VI) and/or vanadium(V) compounds and iodine(VII) or iodine(V) or tellurium(VI) compounds, the atomic ratio of molybdenum or tungsten or vanadium to iodine or tellurium being 6:1.

8. A process as claimed in Claims 1 to 4, wherein the partially oxidized carbon carrier is doped with vanadium(V) compounds and titanium and/or zirconium(III) or zirconium(IV) compounds, the ratio of vanadium to titanium and/or zirconium being from 1:1 to 2:1.

9. A process as claimed in Claims 1 to 4 and 6 to 8, wherein the partially oxidized carbon carrier which is doped with the molybdeum(VI) and/or tungsten(VI) and/or vanadium(V) compounds additionally contains elements of sub-group 8, such as iron, cobalt or nickel in the form of their divalent oxides, oxide hydroxides or hydroxides and/or elements of sub-group 4, such as zirconium or titanium, in the form of their trivalent and/or tetravalent oxides or oxide hydroxides.

10. A process as claimed in Claims 1 to 9, wherein an iron(III) nitrate/hydrogen peroxide mixture is used instead of oxygen as the oxidizing agent.

11. A process as claimed in Claims 1 to 10, wherein the carbon carrier contains added anionic and/or cationic polyelectrolytes or is used in combination with these.

## Revendications

1. Procédé d'épuration par oxydation des eaux usées au moyen d'un catalyseur carboné et d'agents d'oxydation, caractérisé en ce que l'on utilise un support au carbone, qui est oxydé anodiquement dans des acides minéraux aqueux, dans des conditions de potentiel de $\epsilon_h$ = +1,3 V à $\epsilon_h$ = +10 V, et qui est ensuite dopé avec des composés de molybdène-VI et/ou de tungstène-VI et/ou de vanadium-V.

2. Procédé suivant la revendication 1, caractérisé en ce que l'on utilise, comme support au carbone, du graphite, du coke ou du charbon actif.

3. Procédé suivant la revendication 1 ou 2, caractérisé en ce que l'on effectue l'oxydation anodique dans de l'acide nitrique aqueux, dans des conditions de potentiel de $\epsilon_h$ = +1,8 à $\epsilon_h$ = +2,5 V.

4. Procédé suivant l'une quelconque des revendications 1 à 3, caractérisé en ce que l'on utilise, pour le dopage du support au carbone, des solutions aqueuses de molybdates et/ou de tungstates de métaux alcalins et/ou des solutions de vanadates.

5. Procédé suivant l'une quelconque des revendications 1 à 4, caractérisé en ce que, complémentairement au dopage avec des composés de molybdène-VI et/ou de tungstène-VI et/ou de vanadium-V, on effectue un traitement avec des solutions aqueuses de sulfures de métaux alcalins ou d'ammonium.

6. Procédé suivant l'une quelconque des revendications 1 à 4, caractérisé en ce que l'on dope le support au carbone oxydé anodiquement avec des composés de molybdène-VI et de fer-III et en ce qu'on le réduit partiellement avec des solutions aqueuses d'hydrate d'hydrazine.

7. Procédé suivant l'une quelconque des revendications 1 à 4, caractérisé en ce que l'on dope le support au carbone oxydé anodiquement avec des composés de molybdène-VI et/ou de tungstène-VI et/ou de vanadium-V et avec des composés d'iode-VII ou d'iode-V ou de tellure-VI, le rapport atomique du molybdène ou du tungstène ou du vanadium à l'iode ou au tellure étant de 6:1.

8. Procédé suivant l'une quelconque des revendications 1 à 4, caractérisé en ce que l'on dope le support au carbone oxydé anodiquement avec des composés de vanadium-V et des composés de titane et/ou de zirconium-III ou de zirconium-IV, le rapport du vanadium au titane et/ou au zirconium étant de 1:1 à 2:1.

9. Procédé suivant l'une quelconque des revendications 1 à 4 et 6 à 8, caractérisé en ce que les supports au carbone oxydés anodiquement et dopés avec les composés de molybdène-VI et/ou de tungstène-VI et/ou de vanadium-V contiennent complémentairement des éléments du groupe VIII, tels que le fer, le cobalt, le nickel, sous forme de leurs oxydes, oxyhydrates ou hydroxydes divalents, et/ou des éléments du groupe IV, tels que le zirconium, le titane, sous forme de leurs oxydes ou oxyhydrates trivalents et/ou tétravalents.

10. Procédé suivant l'une quelconque des revendications 1 à 9, caractérisé en ce que l'on utilise

comme agents d'oxydation, à la place de l'oxygène, des mélanges de nitrate de fer-III et de peroxyde d'hydrogène.

11. Procédé suivant l'une quelconque des revendications 1 à 10, caractérisé en ce que le support au carbone contient complémentairement des polyélectrolytes anioniques et/ou cationiques ou est utilisé en combinaison avec ceux-ci.